# EUROPÄISCHE PATENTSCHRIFT

(11) **EP 0 568 729 B1**
(45) Veröffentlichungstag und Bekanntmachung des Hinweises auf die Patenterteilung: **03.04.1996**
(21) Anmeldenummer: 92118711.8
(22) Anmeldetag: 02.11.1992
(51) Int. Cl.: G11B 33/04

(54) **Diskettenbox**
Diskette container
Boîte pour disquette

(30) Priorität: 04.05.1992 DE 9205830 U
(43) Veröffentlichungstag der Anmeldung: 10.11.1993
(73) Patentinhaber: Herbert Richter, Metallwaren-Apparatebau GmbH & Co., D-75117 Pforzheim (DE)
(72) Erfinder: Richter, Herbert, W-7543 Engelsbrand (DE)
(74) Vertreter: Trappenberg, Hans

(56) Entgegenhaltungen:
- EP-A- 0 198 434
- EP-A- 0 384 525
- DE-A- 3 008 513
- DE-U- 8 436 935
- DE-U- 8 532 586

## Beschreibung

Die Erfindung betrifft eine Diskettenbox zur Aufnahme einer Compact-Disc. Insbesondere betrifft die Erfindung eine Diskettenbox, in der ein Plattenträger schubladenartig gegen die Kraft einer Feder zu verschieben und in der eingeschobenen Lage durch eine lösbare Arretierung gehalten ist.

Compact-Disketten werden üblicherweise in einer mit einem Klappdeckel versehenen Kunststoffbox geliefert. Zum Aufbewahren beziehungsweise Stapeln dieser Boxen sind Regale bestimmter Länge beziehungsweise bestimmter Höhe erforderlich, die mit Einteilungen zum Einschieben dieser Boxen versehen sind. Die Dicke der Boxen wie auch die Dicke der Einteilungen lassen jedoch die Unterbringung nur einer geringen Anzahl solcher CD-Boxen zu.

Insbesondere zum Aufbewahren der wertvollen Compact-Disketten in einem Kraftfahrzeug sind solche Regale nicht geeignet. In diesen Regalen können die Disketten nicht sicher gehalten werden. Des weiteren ist das Ergreifen und Einschieben der Disketten mit einer Hand sehr schwierig. Darüber hinaus benötigen solche bekannten Aufbewahrungseinheiten viel Platz.

Aus der EP-A-0 384 525 ist ein Halter für eine Diskette bekannt, auf welchem die Diskette im Ruhezustand arretiert ist. Die Arretierung beziehungsweise Entriegelung der Diskette geschieht in der Weise, daß auf dem Halter am Umfang der Diskette drei Haken angebracht sind, von denen zwei fest angeordnet und einer auf einem verschiebbaren Schlitten angeordnet ist. Wird der Schlitten in radialer Richtung vom Mittelpunkt der Diskette weg bewegt, umgreift der auf dem Schlitten befindliche Haken die Diskette nicht mehr, so daß die Diskette vom Halter gelöst werden kann. Die Verschiebung des Schlittens geschieht dadurch, daß etwa an der Stirnseite des Schlittens eine Blattfeder angeordnet ist, welche von am Schlitten befindlichen Haken umgriffen wird, wodurch sich der Schlitten entsprechend der Auslenkung der Blattfeder verschiebt. Die Blattfeder wird durch eine sich in einem CD-Abspielgerät befindliche Vorrichtung betätigt.

In der DE-U-84 36 935 ist ein Behälter für eine Schall- oder Bildplatte gezeigt, bei der die Platte gegen eine sich im hinteren Teil des Behälters befindliche Blattfeder geschoben wird. Die Blattfeder hat zwei beidseits eines Totpunkts angeordnete Ruhestellungen. Zum Einschieben einer Platte in den Behälter muß diese vollständig in den Behälter geschoben werden.

Aufgabe der Erfindung ist eine Diskettenbox anzugeben, bei der das Einschieben und Ergreifen einer Diskette einfach zu handhaben ist und in der die Disketten sicher und staubfrei aufbewahrt werden können, wobei die Diskettenbox möglichst wenig Platz benötigt. Des weiteren soll die Diskettenbox einfach und preiswert herstellbar sein.

Die Lösung dieser Aufgabe ergibt sich durch die Ausgestaltung einer eingangs genannten Diskettenbox gemäß den Merkmalen des kennzeichnenden Teils des Anspruchs 1. Vorteilhafte Weiterbildungen der Erfindung ergeben sich aus den Unteransprüchen.

Der in den Plattenträger eingreifende, verschwenkbar an der Bodenplatte angeordnete, Federbügel hält den Plattenträger in beiden Endstellungen, sowohl in der ausgefahrenen wie auch in der eingefahrenen Stellung, sicher in seiner jeweiligen Extremlage. Darüber hinaus muß der Federbügel lediglich durch Druck auf einen Auswerfer beziehungsweise auf den Plattenträger über seine Totlage gebracht werden, damit er sich selbsttätig in die jeweils gegenüberliegende Extremlage bewegt, was wiederum die Ausführung, insbesondere des Auswerfers, vereinfacht. Außerdem nehmen die nun nur noch notwendigen Teile sehr wenig Platz ein, so daß auch eine raumsparende Ausführung dieser Diskettenbox gewährleistet ist.

Durch die Ausbildung des Federbügels als ein bogenförmig gebogener, im Querschnitt runder Federdraht, läßt sich der Federbügel sehr einfach an der Bodenplatte befestigen. Darüber hinaus wird nur sehr wenig Platz zwischen Bodenplatte und Plattenträger benötigt.

Dadurch, daß die CD mittels des Schiebers ausgeworfen werden kann, läßt sich die Diskettenbox sehr einfach bedienen. Durch die Umlenkung des zweiarmigen, an der Bodenplatte gelagerten Hebels, läßt sich die CD in besonders vorteilhafter Weise durch Eindrücken des Schiebers aus der Diskettenbox auswerfen.

Die Lagerung des Schiebers auf der Bodenplatte zwischen der Wand und einem an die Bodenplatte angespritzten Steg läßt sich in vorteilhafter Weise sehr leicht realisieren. Durch die in der Ausnehmung des Schiebers angeordnete Feder wird der Schieber nach einer Betätigung wieder aus der Diskettenbox herausgeschoben.

Dadurch, daß die vordere Wandung der Ausnehmung des Schiebers in der Ausgangsposition des Schiebers von hinten an den Steg derart anstößt, daß sich der Schieber beim Anstoßen in der Ausgangsposition befindet, nimmt der Schieber bei Nichtbetätigung immer dieselbe Lage ein. Dies resultiert in ein optisch schönes Bild der Diskettenbox.

Durch die Ausgestaltung der Verbindung des Schiebers mit dem Plattenträger als ein zweiarmiger Hebel, welcher im mittleren Bereich eine Öffnung aufweist, in welche ein an die Bodenplatte angespritzter Zapfen eingreift, läßt sich die Verbindung sehr leicht von der Bodenplatte abnehmen. Durch die Verbindung des Hebels mit dem Schieber mittels eines Zapfens, welcher am Hebel angespritzt ist und in eine Ausnehmung des Schiebers eingreift, kann die Verbindung des Schiebers mit dem Hebel sehr leicht gelöst werden. Durch die Verbindung des Hebels mit dem Plattenträger mittels eines Zapfens, welcher an den Plattenträger angespritzt ist und in eine Ausnehmung des Hebels eingreift, läßt sich die Verbindung des Hebels mit dem Plattenträger sehr einfach lösen. Dadurch, daß die Verbindung des Hebels mit dem Schieber und die Verbindung des Hebels mit dem Plattenträger sehr einfach lösbar sind und der Hebel in einfacher Weise mit der Bodenplatte verbunden ist, läßt sich die gesamte Verbindung sehr einfach aufbauen. Dies bedeutet, daß sich die Verbindung sehr leicht automatisch herstellen läßt.

Durch die Ausnehmung des an der Unterseite des Plattenträgers angespritzten Vorsprungs, in der der Federbügel geführt wird, erhält der Federbügel eine sehr gute Führung. Dies ist besonders wichtig, da der Federbügel beim Einschieben einer Diskette in die Diskettenbox unter einer vergrößerten Spannung steht und eine undefinierte Form annimmt. Durch die Ausnehmung in dem Vorsprung des Plattenträgers wird auch gewährleistet, daß die Federkraft am Plattenträger in etwa immer an derselben Stelle angreift. Hierdurch wird im wesentlichen vermieden, daß sich der Plattenträger in der Diskettenbox verkantet.

Durch den im hinteren Bereich auf der Oberseite des Plattenträgers angespritzten Steg, welcher einem Teilumfang einer CD entspricht, und die an den Seiten des Plattenträgers vorhandenen Stege, wird in vorteilhafter Weise vermieden, daß eine in die Diskettenbox eingeschobene CD sich hin- und herbewegen kann, wodurch Klappergeräusche vermieden werden. Dadurch, daß die seitlichen Stege sich nur soweit von der Seitenwand erstrecken, daß sie nur einen Bereich der CD überdecken, der keine Information enthält, ist die CD gegen Beschädigungen geschützt.

Durch die kleinen Hervorhebungen, welche an den seitlichen Stegen vorhanden sind, wird in vorteilhafter Weise erreicht, daß eine in die Diskettenbox eingeschobene CD unbeabsichtigt aus der Diskettenbox gleiten kann. Die Hervorhebungen können sägezahnförmig ausgebildet sein oder die Form einer doppelten Rampe aufweisen. Durch die sägezahnförmige Ausbildung der Hervorhebungen wird erreicht, daß beim Herausnehmen der CD aus der Diskettenbox ein großer Widerstand überwunden werden muß. Sind die Hervorhebungen in Form einer doppelten Rampe ausgebildet, muß beim Einschieben oder Herausnehmen der CD in etwa derselbe Widerstand überwunden werden.

Durch den Sichtschlitz an der Gehäuse-Vorderseite kann in vorteilhafter Weise erkannt werden, ob sich eine CD in der Diskettenbox befindet oder ob die Diskettenbox leer ist. Eine solche Feststellung kann mittels des sich vom Plattenträger erstreckenden Vorsprungs, welcher sich in der Öffnung der Gehäuse-Vorderseite befindet, wenn keine CD in der Diskettenbox eingeschoben ist, noch leichter getroffen werden. Dadurch, daß sich die Öffnung in unmittelbarer Nähe des Schiebers befindet und der Vorsprung so ausgebildet ist, daß er, wenn er sich in der Öffnung befindet, von außen ertastbar ist, kann man beispielsweise beim Betätigen des Schiebers mit den Fingern feststellen, ob sich eine CD in der Diskettenbox befindet. Dies ist insbesondere beim Autofahren vorteilhaft, da die Augen weiterhin den Straßenverkehr beobachten können.

Durch die Ausnehmungen, die sich beim Zusammenfügen von Deckplatte und Bodenplatte der Diskettenbox in der Mitte der Seitenwände ausbilden, kann die Diskettenbox in vorteilhafter Weise in eine Diskettenboxhalterung eingeführt werden. Durch die Anordnung der Ausnehmungen der Diskettenbox und der Stege der Diskettenboxhalterung ist es auch möglich, in die Diskettenboxhalterung einzelne Diskettenboxen einzuschieben. Durch die besondere Ausgestaltung der Kanten der Diskettenbox derart, daß sich beim Aufeinanderstapeln von Diskettenboxen seitlich in Höhe der Berührungsstellen Ausnehmungen ausbilden, in die Stege der Diskettenboxhalterung eingreifen, wird eine besonders gute Führung der Diskettenbox in der Halterung erreicht. Durch Aufeinanderkleben von Diskettenboxen kann somit ein Paket gebildet werden, welches in die Halterung geschoben werden kann.

Weitere Einzelheiten und Vorteile der Erfindung ergeben sich aus einem besonderen Ausführungsbeispiel, welches nachstehend unter Bezug auf die Zeichnung beschrieben wird.

Es zeigen:
- Fig. 1: eine Diskettenbox mit abgenommener Deckplatte und
- Fig. 3: mehrere Diskettenboxen in einer Halterung.

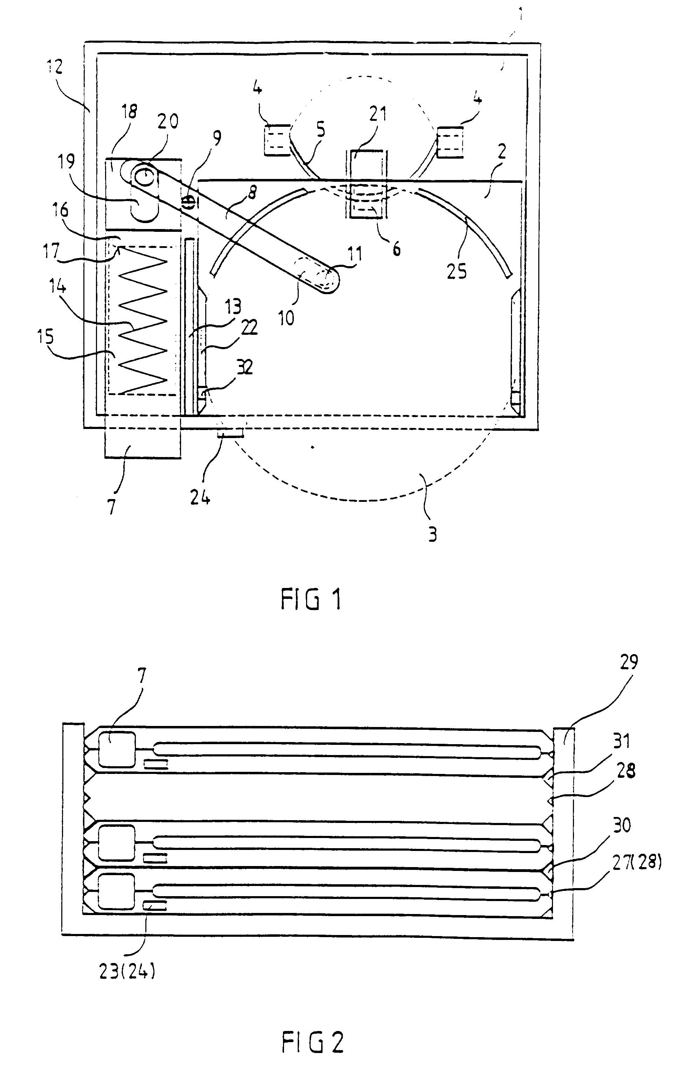

Wie der Fig. 1 zu entnehmen ist, ist in einer Bodenplatte (1) ein Plattenträger, auf dem eine Compact-Disc (CD) (3) auflegbar ist, längsverschiebbar geführt. In Schwenklagern (4) an der Bodenplatte (1) ist ein Federbügel (5) gelagert. Der Federbügel (5) greift in eine gabelförmige Ausnehmung eines an die Unterseite des Plattenträgers (2) angespritzten Vorsprungs (6) ein. Der Vorsprung (6) wird in einer Ausnehmung (21) in der Bodenplatte (1) geführt.

Seitlich neben dem Plattenträger (2) ist ein Schieber (7), ebenfalls längsverschiebbar, geführt. Die Führung des Schiebers (7) wird aus einer Seitenwand (12) der Diskettenbox, einem entsprechenden Teil der Bodenplatte (1) sowie einem Steg (13) gebildet. Der Steg (13) ist an die Bodenplatte (1) angespritzt und somit einstückig mit ihr verbunden.

Der Schieber (7) weist an seinem vorderen Ende eine Lasche (18) auf, welche eine Ausnehmung (19) hat. In die Ausnehmung (19) greift ein zapfenförmiger Vorsprung (20) eines Hebels (8) ein, welcher über einen an die Bodenplatte (1) angespritzten Zapfen (9) verschwenkbar gelagert ist. An dem dem Zapfen (20) gegenüberliegenden Ende des Hebels (8) weist der Hebel (8) eine Ausnehmung (10) auf. In die Ausnehmung (10) greift ein zapfenförmiger Vorsprung (11) ein, welcher an der Unterseite des Plattenträgers (2) angespritzt ist.

Der Plattenträger (2) weist auf seiner Oberseite einen an ihn angespritzten Steg (25) auf. Der Steg (25) befindet sich im hinteren Teil des Plattenträgers (2) und entspricht in seiner Anordnung einem Teilumfang einer CD. Durch den Steg (25) wird eine auf den Plattenträger (2) geschobene CD daran gehindert, über den Plattenträger (2) hinauszugleiten. Der Plattenträger (2) weist an seinen Seiten Stege (22) auf, die sich parallel zur Grundfläche des Plattenträgers (2) erstrecken. Die Stege (22) erstrecken sich soweit in den Bereich des Plattenträgers (2) hinein, daß sie eine auf den Plattenträger (2) geschobene CD in ihrem Randbereich überdecken. Der Abstand der Stege (22) zur Grundfläche des Plattenträgers (2) ist so gewählt, daß er in etwa der Dicke einer CD entspricht. Dadurch wird eine auf den Plattenträger (2) geschobene CD leicht klemmend auf dem Plattenträger (2) gehalten. Der Randbereich der CD enthält keine Information, so daß durch die Stege (22) eventuell erfolgte Beeinträchtigungen der CD keinen Verlust von Daten hervorrufen. Der Steg (25) muß nicht, wie in Fig. 1 gezeigt, durchgehend sein, er kann auch unterbrochen sein oder aus einzelnen schmalen Stützelementen bestehen. Die Stege (22) weisen Hervorhebungen (32) auf, welche so angeordnet sind, daß eine bis zum hinteren Steg (25) in die Diskettenbox eingeschobene CD an ihrem Umfang von ihnen hintergriffen wird. Die Hervorhebungen (32) können unterschiedlich ausgebildet sein. Ein besonders großer Schutz gegen unbeabsichtigtes Herausgleiten einer CD aus der Diskettenbox bieten Hervorhebungen (32), welche die Form eines Sägezahns aufweisen. Es sind jedoch auch andere Formen, wie zum Beispiel halbrund oder pilzförmig, denkbar.

In der Ausnehmung (15) des Schiebers (7) befindet sich eine Feder (14). Die Feder (14) ist so in der Ausnehmung (15) angeordnet, daß sie mit ihrem einen Ende an der Stirnseite der Ausnehmung (15) angreift, die der Betätigung am nächsten ist, und mit ihrem andere Ende an den von der Ausnehmung (15) umschlossenen Steg (16) anstößt.

Obwohl die Stege und Zapfen an die jeweiligen entsprechenden Teile angespritzt sind und somit einstückig ausgebildet sind, können die Teile auch einzeln angebracht werden. So können die zapfenförmigen Vorsprünge beispielsweise als schraubbare Bolzen ausgebildet sein oder aufgenietet werden.

In der Fig. 1 ist der Plattenträger in ausgefahrener Stellung gezeigt. Nach Auflegen einer Diskette (3) kann der Plattenträger (2) durch Druck auf seine Vorderkante oder durch Druck auf die Vorderkante der CD in die Diskettenbox geschoben werden. Beim Einschieben überschreitet der Federbügel (5) seine Totlage. Beim Überschreiten der Totlage will der Federbügel sich entspannen und die in der Fig. 1 gestrichelt eingezeichnete Lage einnehmen. Da der Federbügel (5) in die gabelförmige Ausnehmung des an der Unterseite des Plattenträgers (2) angespritzten Vorsprungs (6) eingreift, wird der Plattenträger (2) durch die vom Federbügel (5) auf ihn ausgeübte Kraft in die Diskettenbox gezogen.

Gleichzeitig wird über die Verbindung des zapfenförmigen Vorsprungs (11) mit der Ausnehmung (10) des Hebels (8) der Hebel (8) um den Zapfen (9) verschwenkt. Da die Ausnehmung (19) des Schiebers (7), in der sich der zapfenförmige Vorsprung (20) des Schiebers (8) befindet, langlochförmig ist, wird die Lage des Schiebers (7) durch die Verschwenkung des Hebels (8) nicht beeinträchtigt. Nach der Verschwenkung befindet sich der zapfenförmige Vorsprung (20) des Hebels (8) an dem Ende der langlochförmigen Ausnehmung (19), das der Betätigung des Schiebers (7) am nächsten liegt. Durch Druck auf die Betätigung des Schiebers (7) bewegt sich der Schieber (7) in der Gleitschiene in die Diskettenbox hinein. Da sich der zapfenförmige Vorsprung (20) des Hebels (8) an dem der Betätigung am nächsten liegenden Ende der langlochförmigen Ausnehmung (19) befindet, wird der Zapfen (20) von dem Schieber (7) mitgenommen, wodurch der Hebel (8) erneut um den Zapfen (9) verschwenkt wird. Durch den Eingriff des an der Unterseite des Plattenträgers (2) angespritzten zapfenförmigen Vorsprungs (11) in die Ausnehmung (10) des Hebels (8) wird der Plattenträger (2) aus der Diskettenbox geschoben, woraufhin die CD von dem Plattenträger (2) genommen werden kann.

Zu beachten ist, daß der Schieber (7) nur soweit in die Diskettenbox eingeschoben werden braucht, bis der Federbügel (5) erneut seinen Totunkt überschreitet. Nach Überschreiten seines Totpunkts will sich der Federbügel (5) nämlich wieder in seine Ausgangslage entspannen, wodurch er den Plattenträger (2) soweit aus der Diskettenbox hinausschiebt, bis er in seiner Endlage ist.

Nachdem kein Druck auf die Betätigung des Schiebers (7) mehr ausgeübt wird, entspannt sich die vorher zusammengedrückte Feder (14), wodurch der Schieber (7) wieder aus der Diskettenbox geschoben wird. Der zapfenförmige Vorsprung (20) des Hebels (8) befindet sich dann an dem der Betätigung entferntesten Ende der langlochförmigen Ausnehmung (19) des Schiebers (7). Durch die langlochförmige Ausnehmung (19) des Schiebers (7) ist es möglich, daß der Schieber (7) immer in seine Ausgangslage zurückgehen kann.

In der Ausgangsposition des Plattenträgers (2), das heißt bei nicht eingeschobener CD, befindet sich ein Vorsprung (24) in einer Ausnehmung der Gehäuse-Vorderseite der Diskettenbox. Der Vorsprung (24) ist so ausgebildet, daß er von außen ertastbar ist. Da sich die Ausnehmung und damit der Vorsprung (24) in unmittelbarer Nähe des Schiebers (7) befindet ist es möglich, vor der Betätigung des Schiebers (7) zu ertasten, ob sich der Vorsprung (24) in der Ausnehmung befindet oder nicht. Befindet sich der Vorsprung (24) in der Ausnehmung, bedeutet das, daß keine CD in der Diskettenbox vorhanden ist.

Wie der Fig. 2 zu entnehmen ist, können in eine Halterung (29) einzelne Diskettenboxen eingeschoben werden. Die Boden- und Deckplatte der Diskettenbox sind so ausgebildet, daß sich beim Zusammenfügen von Bodenplatte und Deckplatte in der Mitte der Seitenwände Ausnehmungen (27) ausbilden. Die Halterung (29) weist an ihren Seitenwänden Stege (28) und (31) auf. Die Stege (28) sind etwas kleiner als die Stege (31) ausgebildet und greifen in die Ausnehmungen (27) der Diskettenbox. Dadurch kann eine einzelne Diskettenbox in die Halterung geschoben werden. Die Kanten der Diskettenbox sind so ausgebildet, daß sie bei in die Halterung eingeschobener Diskettenbox an die Stege (31) angepaßt sind. Faßt man mehrere Diskettenboxen beispielsweise durch Aufeinanderkleben zu einem Paket zusammen, so bilden sich durch die besondere Ausführungsform der Kanten weitere Ausnehmungen (30). In die Ausnehmungen (30) greifen die Stege (31) der Diskettenboxhalterung. Dadurch ist es möglich, Pakete von Diskettenboxen in die Halterung einzuschieben. Durch die Stege (31) wird die Führung sowie der Sitz des Diskettenboxpaketes in der Halterung verbessert.

Da Diskettenpakete in die Halterung geschoben werden können, genügt es, wenn nur ein Teil des Paketes von der Halterung umfaßt wird. Dadurch kann auch ein Paket, das mehr Diskettenboxen enthält als von der Halterung umfaßt werden können, in die Halterung geschoben werden. So kann beispielsweise ein Paket aus acht Diskettenboxen in eine Halterung geschoben werden, die nur fünf Diskettenboxen umfassen kann. Die restlichen drei Diskettenboxen stehen oben über.

## Patentansprüche

1. Diskettenbox zur Aufnahme einer Compact-Disc (CD), gebildet aus einem flachen Gehäuse mit Boden- und Deckplatte, in dem ein Plattenträger schubladenartig gegen die Kraft einer Feder zu verschieben und in der eingeschobenen Lage durch eine lösbare Arretierung gehalten ist,
dadurch gekennzeichnet,
daß die Feder ein an der Unterseite des Plattenträgers (2) angreifender, quer zu dessen Verschieberichtung an der Bodenplatte (1) verschwenkbar angeordneter Federbügel (5) ist, wobei
der Federbügel (5) ein bogenförmig gebogener, im Querschnitt runder Federdraht ist.

2. Diskettenbox nach Anspruch 1,
dadurch gekennzeichnet,
daß die Enden des Federdrahts geringfügig nach außen abgebogen sind.

3. Diskettenbox nach Anspruch 1 oder 2,
dadurch gekennzeichnet,
daß seitlich des Plattenträgers (2) in gleicher Richtung verschiebbar ein Schieber (7) gelagert ist, der über einen zweiarmigen Hebel (8) gelenkig mit dem Plattenträger (2) verbunden ist, wobei der Hebel (8) über einen an die Bodenplatte (1) angespritzten Zapfen (9) verschwenkbar gelagert ist.

4. Diskettenbox nach Anspruch 3,
dadurch gekennzeichnet,
daß der Schieber (7) derart gelagert ist, daß er in einer in der Bodenplatte (1) ausgebildeten, oben offenen Gleitschiene geführt ist, die unten von der Bodenplatte (1) und seitlich von einer Wand (12) der Bodenplatte (1) sowie von einem an die Bodenplatte (1) angespritzten Steg (13) gebildet wird.

5. Diskettenbox nach einem der Ansprüche 3 oder 4,
dadurch gekennzeichnet,
daß der Schieber (7) von einer Feder (14) in seine Ausgangsposition rückgeführt wird, welche Feder (14) in einer unten offenen Ausnehmung (15) des Schiebers angeordnet ist und von vorne gegen einen an die Bodenplatte (1) angespritzten Steg (16) stößt, wobei die Ausnehmung (15) den Steg (16) derart umschließt, daß eine vordere Wandung (17) der Ausnehmung (15) in der Ausgangsposition des Schiebers (7) von hinten an den Steg (16) anstößt.

6. Diskettenbox nach mindestens einem der Ansprüche 3 bis 5,
dadurch gekennzeichnet,
daß der Schieber (7) an seinem vorderen Ende eine Lasche (18) aufweist, welche eine Ausnehmung (19) hat, in die ein zapfenförmiger Vorsprung (20) des Hebels (8) eingreift, wobei der Hebel (8) seinerseits eine Ausnehmung (10) aufweist, in welche ein zapfenförmiger Vorsprung (11) eingreift, welcher an der Unterseite des Plattenträgers (2) angespritzt ist.

7. Diskettenbox nach mindestens einem
der Ansprüche 1 bis 6,
dadurch gekennzeichnet,
daß der Federbügel (5) derart an der Unterseite des Plattenträgers angreift, daß er in eine Ausnehmung eines an der Unterseite des Plattenträgers (2) angespritzten Vorsprung (6) eingreift, welcher in einer Ausnehmung (21) in der Bodenplatte (1) geführt wird.

8. Diskettenbox nach mindestens einem der Ansprüche 1 bis 7,
dadurch gekennzeichnet,
daß der Plattenträger (2) auf seiner Oberseite im hinteren Bereich einen an ihn angespritzten Steg (25) aufweist, welcher einem Teilumfang einer CD entspricht und eine in die Diskettenbox eingeschobene CD hindert, über den Plattenträger (2) hinauszugleiten, und an den Seiten sich jeweils von Seitenwänden (26) des Plattenträgers (2) parallel zur Grundplatte des Plattenträgers (2) erstreckende angespritzte Stege (22) aufweist, welche die in die Diskettenbox eingeschobene, auf dem Plattenträger (2) liegende CD an ihrem keine Information enthaltenden Rand derart einklemmen, daß die CD nicht klappert.

9. Diskettenbox nach Anspruch 8,
dadurch gekennzeichnet,
daß die an den Seitenwänden (26) angespritzten Stege (22) Hervorhebungen (32) derart aufweisen, daß eine bis zum hinteren Steg (25) in die Diskettenbox eingeschobene CD an ihrem Umfang von ihnen hintergriffen wird.

10. Diskettenbox nach mindestens einem der Ansprüche 1 bis 9,
dadurch gekennzeichnet,
daß an der Gehäuse-Vorderseite ein Sichtschlitz vorgesehen ist.

11. Diskettenbox nach mindestens einem der Ansprüche 1 bis 10,
dadurch gekennzeichnet,
daß an der Gehäuse-Vorderseite mindestens eine Öffnung (23) vorgesehen ist, in die ein sich vom Plattenträger (2) erstreckender Vorsprung (24) derart eingreift, daß in der Stellung des Plattenträgers (2), in der keine CD in der Diskettenbox eingeschoben ist, sich der Vorsprung in der Öffnung (23) befindet und in der Stellung des Plattenträgers (2), in der eine CD in der Diskettenbox eingeschoben ist, sich der Vorsprung nicht in der Öffnung (23) befindet.

12. Diskettenbox nach Anspruch 11,
dadurch gekennzeichnet,
daß sich die öffnung (23) in unmittelbarer Nähe des Schiebers (7) befindet und der Vorsprung (24) so ausgebildet ist, daß er, wenn er sich in der Öffnung (23) befindet, von außen ertastbar ist.

13. Diskettenbox nach mindestens einem der Ansprüche 1 bis 12,
dadurch gekennzeichnet,
daß die Deckplatte und die Bodenplatte (1) so ausgebildet sind, daß sich beim Zusammenfügen von Deckplatte und Bodenplatte (1) in der Mitte der Seitenwände Ausnehmungen (27) ausbilden, in die Stege (28) einer Diskettenboxhalterung (29) eingreifen.

14. Diskettenbox nach mindestens einem der Ansprüche 1 bis 13,
dadurch gekennzeichnet,
daß die Deckplatte und die Bodenplatte (1) so ausgebildet sind, daß sich beim Aufeinanderstapeln von Diskettenboxen seitlich in Höhe der Berührungsstellen der Diskettenboxen Ausnehmungen (30) ausbilden, in die Stege (31) der Diskettenboxhalterung (29) eingreifen.

## Claims

1. A diskette box for accommodating a compact disc (CD) formed from a flat housing with bottom and top plates and in which a disc carrier is to be pushed drawer-like against the force of a spring and is held in the inserted position by a releasable arresting means, characterised in that the spring is a spring loop (5) which engages against the underside of the disc carrier (2) and which is arranged on the bottom plate (1) pivotably transversely relative to the direction of displacement of the disc carrier, wherein the spring loop (5) is a spring wire which is curved in an arcuate shape and which is of round cross-section.

2. A diskette box according to claim 1 characterised in that the ends of the spring wire are bent away slightly outwardly.

3. A diskette box according to claim 1 or claim 2 characterised in that mounted laterally of the disc carrier (2) displaceably in the same direction is a slider (7) which is connected pivotably by way of a two-armed lever (8) to the disc carrier (2), wherein the lever (8) is pivotably mounted by way of a projection (9) injection-moulded on the bottom plate (1).

4. A diskette box according to claim 3 characterised in that the slider (7) is mounted in such a way that it is guided in an upwardly open slide rail which is provided in the bottom plate (11) and which is formed at the underside by the bottom plate (1) and laterally by a wall (12) of the bottom plate (1) and by a limb (13) which is injection-moulded on to the bottom plate (1).

5. A diskette box according to one of claims 3 and 4 characterised in that the slider is returned into its starting position by a spring (14), which spring (14) is arranged in a downwardly open opening (15) of the slider and bears from the front against a limb (16) which is injection-moulded on to the bottom plate (1), wherein the opening (15) encloses the limb (16) in such a way that a front wall (17) of the opening (15) bears from behind against the limb (16) in the starting position of the slider (7).

6. A diskette box according to at least one of claims 3 to 5 characterised in that at its front end the slider (7) has a tongue (18) having an opening (19) into which a pin-like projection (20) of the lever (8) engages, wherein the lever (8) in turn has an opening (10) into which engages a pin-like projection (11) which is injection-moulded on the underside of the disc carrier (2).

7. A diskette box according to at least one of claims 1 to 6 characterised in that the spring loop (5) engages the underside of the disc carrier in such a way that it engages into an opening in a projection (6) which is injection-moulded at the underside of the disc carrier (2) and which is guided in an opening (21) in the bottom plate (1).

8. A diskette box according to at least one of claims 1 to 7 characterised in that on its top side and in the rearward region the disc carrier (2) has a limb (25) which is injection-moulded thereon and which corresponds to a part of the periphery of a CD and which prevents a CD which is inserted into the diskette box from sliding out over the disc carrier (2) and at each of the sides has injection-moulded limbs (22) which respectively extend from side walls (26) of the disc carrier (2) parallel to the base plate of the disc carrier (2) and which clamp the CD which is inserted into the diskette box and which lies on the disc carrier (2) at the edge thereof which contains no information, in such a way that the CD does not rattle.

9. A diskette box according to claim 8 characterised in that the limbs (22) which are injection-moulded on the side walls (26) have raised portions (32) in such a way that they engage behind a CD which is inserted into the diskette box as far as the rear limb (25), at the periphery of the CD.

10. A diskette box according to at least one of claims 1 to 9 characterised in that a viewing slot is provided at the front side of the housing.

11. A diskette box according to at least one of claims 1 to 10 characterised in that provided at the front side of the housing is at least one opening (23) into which a projection (24) extending from the disc carrier (2) engages in such a way that, in the position of the disc carrier (2) in which no CD is inserted in the diskette box, the projection is in the opening (23), and, in the position of the disc carrier (2) in which a CD is inserted in the diskette box, the projection is not in the opening (23).

12. A diskette box according to claim 11 characterised in that the opening (23) is disposed in the immediate vicinity of the slider (7) and the projection (24) is of such a configuration that, when it is in the opening (23), it can be touched from the outside.

13. A diskette box according to at least one of claims 1 to 12 characterised in that the top plate and the bottom plate (1) are of such a configuration that when the top plate and the bottom plate (1) are assembled, formed in the middle of the side walls are openings (27) into which engage limbs (28) of a diskette box holder (29).

14. A diskette box according to at least one of claims 1 to 13 characterised in that the top plate and the bottom plate (1) are of such a configuration that when diskette boxes are stacked one upon the other openings (30) are formed at the sides at the level of the locations of contact of the diskette boxes, the limbs (31) of the diskette box holder (29) engaging into the openings (30).

## Revendications

1. Boîtier pour disque destiné à recevoir un disque compact (CD), constitué par une enveloppe plate pourvue d'une plaque de fond et d'une plaque formant couvercle, dans lequel un porte-disque peut coulisser à la manière d'un tiroir à l'encontre de la force d'un ressort en étant maintenu par un organe d'arrêt amovible dans la position où il est enfoncé, caractérisé par le fait que le ressort est un étrier élastique (5) qui vient en prise sur le côté inférieur du porte-disque (2) et qui est monté sur la plaque de fond (1) en pouvant pivoter transversalement par rapport à sa direction de coulissement, l'étrier élastique (5) étant un fil élastique qui est recourbé en forme d'arc et dont la section transversale est circulaire.

2. Boîtier pour disque selon la revendication 1, caractérisé par le fait que les extrémités du fil élastique sont légèrement recourbées vers l'extérieur.

3. Boîtier pour disque selon la revendication 1 ou 2, caractérisé par le fait qu'un poussoir (7) est monté latéralement par rapport au porte-disque (2) en pouvant coulisser dans la même direction, et qu'il est relié d'une manière articulée au porte-disque (2) par l'intermédiaire d'un levier à deux bras (8), le levier (8) étant monté pivotant par l'intermédiaire d'un goujon (9) qui est formé sur la plaque de fond (1) par moulage par injection.

4. Boîtier pour disque selon la revendication 3, caractérisé par le fait que le poussoir (7) est monté de manière à être guidé dans un rail de glissement qui est formé dans la plaque de fond (1), qui est ouvert vers le haut et qui est constitué vers le bas par la plaque de fond (1) et sur le côté par une paroi (12) de la plaque de fond (1), ainsi que par une baguette (13) qui est formée sur la plaque de fond (1) par moulage par injection.

5. Boîtier pour disque selon l'une des revendications 3 et 4, caractérisé par le fait que le poussoir (7) est rappelé par un ressort (14) dans sa position de départ, ce ressort (14) étant disposé dans un évidement (15) du poussoir qui est ouvert vers le bas en venant en butée à l'avant contre une baguette (16) formée sur la plaque de fond (1) par moulage par injection, cependant que l'évidement (15) entoure la baguette (16) d'une manière telle qu'une paroi avant (17) de l'évidement (15) vienne en butée depuis l'arrière sur la baguette (16) dans la position de départ du poussoir (7).

6. Boîtier pour disque selon l'une au moins des revendications 3 à 5, caractérisé par le fait que le poussoir (7) comporte à son extrémité avant une patte (18) qui présente un évidement (19) dans lequel pénètre une partie en saillie (20) en forme de goujon du levier (8), cependant que le levier (8) présente pour sa part un évidement (10) dans lequel pénètre une partie en saillie (11) en forme de goujon qui est formée par moulage par injection sur le côté inférieur du porte-disque (2).

7. Boîtier pour disque selon l'une au moins des revendications 1 à 6, caractérisé par le fait que l'étrier élastique (5) vient en prise avec le côté inférieur du porte-disque de manière à pénétrer dans un évidement d'une partie en saillie (6) qui est formée par moulage par injection sur le côté inférieur du porte-disque (2) et qui est guidée dans un évidement (21) de la plaque de fond (1).

8. Boîtier pour disque selon l'une au moins des revendications 1 à 7, caractérisé par le fait que le porte-disque (2) comporte sur son côté supérieur, dans la région arrière, une baguette (25) qui est formée sur lui par moulage par injection, qui correspond à une partie du pourtour d'un disque compact et qui empêche un disque compact enfoncé dans le boîtier pour disque de glisser vers l'extérieur au-delà du porte-disque (2), et qu'il comporte des baguettes (22) qui sont formées par moulage par injection, qui s'étendent chacune sur les côtés parallèlement à la plaque de base du porte-disque (2), depuis des parois latérales (26) du porte-disque (2), et qui serrent le disque compact enfoncé dans le boîtier pour disque et posé sur le porte-disque (2), et ce, par son bord qui ne contient pas d'informations, de sorte que le disque compact ne se déplace pas.

9. Boîtier pour disque selon la revendication 8, caractérisé par le fait que les baguettes (22) qui sont formées sur les parois latérales (26) par moulage par injection présentent des excroissances (32) d'une manière telle qu'un disque compact enfoncé dans le boîtier pour disque jusqu'à la baguette arrière (25) soit saisi par elles par l'arrière sur son pourtour.

10. Boîtier pour disque selon l'une au moins des revendications 1 à 9, caractérisé par le fait qu'une fente de visualisation est prévue sur le côté avant du boîtier.

11. Boîtier pour disque selon l'une au moins des revendications 1 à 10, caractérisé par le fait qu'il est prévu sur le côté avant du boîtier au moins une ouverture (23) dans laquelle une partie en saillie (24) qui s'étend depuis le porte-disque (2) pénètre d'une manière telle que, dans la position du porte-disque (2) dans laquelle aucun disque compact n'est enfoncé dans le boîtier pour disque, la partie en saillie se trouve dans l'ouverture (23), et que, dans la position du porte-disque (2) dans laquelle un disque compact est enfoncé dans le boîtier pour disque, la partie en saillie ne se trouve pas dans l'ouverture (23).

12. Boîtier pour disque selon la revendication 11, caractérisé par le fait que l'ouverture (23) se trouve au voisinage immédiat du poussoir (7), et que la partie en saillie (24) est conformée de manière à pouvoir la palper depuis l'extérieur lorsqu'elle se trouve dans l'ouverture (23).

13. Boîtier pour disque selon l'une au moins des revendications 1 à 12, caractérisé par le fait que la plaque formant couvercle et la plaque de fond (1) sont conformées d'une manière telle que, lors de l'assemblage de la plaque formant couvercle et de la plaque de fond (1), il se forme, au milieu des parois latérales, des évidements (27) dans lesquels viennent en prise des baguettes (28) d'un dispositif (29) de maintien des boîtiers pour disques.

14. Boîtier pour disque selon l'une au moins des revendications 1 à 13, caractérisé par le fait que la plaque formant couvercle et la plaque de fond (1) sont conformées d'une manière telle que, lorsque l'on empile des boîtiers pour disques, il se forme latéralement, au niveau des endroits de contact entre les boîtiers pour disques, des évidements (30) dans lesquels viennent en prise des baguettes (31) d'un dispositif (29) de maintien des boîtiers pour disques.
